# EUROPEAN PATENT SPECIFICATION

(11) **EP 2 206 664 B1**
(45) Date of publication and mention of the grant of the patent: **12.03.2014**
(21) Application number: 10000152.8
(22) Date of filing: 11.01.2010
(51) Int. Cl.: B65G 69/00, B65G 69/28

(54) **Buffer for docking of a vehicle, such as a truck, at a loading and unloading platform**
Puffer zum Andocken eines Fahrzeugs, wie eines Lastwagens, an eine Lade- und Abladeplattform
Butoir de connexion d'un véhicule, tel qu'un camion, à une plateforme de chargement et de déchargement

(30) Priority: 09.01.2009 NL 1036397
(43) Date of publication of application: 14.07.2010
(73) Proprietor: Hörmann Alkmaar BV, 1800 GC Alkmaar (NL)
(72) Inventor: Wagemaker, Antonius Nicolaas Jan, 1703 SJ Heerhugowaard (NL)
(74) Representative: Koomen, M.J.I.

(56) References cited:
- EP-A- 1 081 071
- WO-A-2006/076538
- DE-A1- 4 117 248
- DE-A1-102005 038 343
- FR-A- 2 855 195
- GB-A- 2 376 075
- US-A1- 2008 042 865

## Description

The present invention relates to a buffer intended to be mounted to a wall according to the preamble of claim 1, as disclosed in document DE-A-4117248.

When loading and unloading goods being transported by trucks it is known to park or dock the truck with its back side against the façade in which a loading and unloading platform is provided. To prevent damage to the façade or the truck during docking it is known to provide the façade at the loading platform with a buffer, against which the vehicle can bump in the event of a wrong driving movement.

The invention aims to provide a buffer, by means of which a truck can dock in a more controlled manner, and by means of which the buffer, façade and the truck can be better protected against crash damage.

The invention further relates to a buffer that is intended to be used in places where vehicles manoeuvre or are parked, such as parking places, car parking stations, loading platforms and such like.

The invention further aims to provide a buffer by means of which an unintended rolling away from the dock of a docked truck can be quickly detected.

The buffer according to the invention to that end is as stated in the appended claim 1.

According to a characteristic of the buffer according to the invention the means comprise a sensor for the detection of a movement of the vehicle and a signaller the controll of which takes place under the effect of a signal from the sensor.

According to another characteristic of the buffer not part of the invention the signaller is formed by a sound signaller or a light signaller, such as a traffic light.

According to yet another characteristic of the buffer not part of the invention the sensor is provided on the front side of the buffer, while it, according to a further characteristic of the buffer according to the invention, is provided countersunk in the material of the buffer.

According to a further characteristic of the buffer according to the invention the buffer is formed of plastic, while it, according to another characteristic, is formed of a polyurethane, or a rubber.

According to yet a further characteristic of the buffer according to the invention the sensor is formed by a capacitive sensor.

Further characteristics and particulars of the invention will be described with reference to the drawings of an example of a buffer according to the invention.
Figure 1 shows a perspective view of a truck in front of a façade with therein provided a loading and unloading platform.

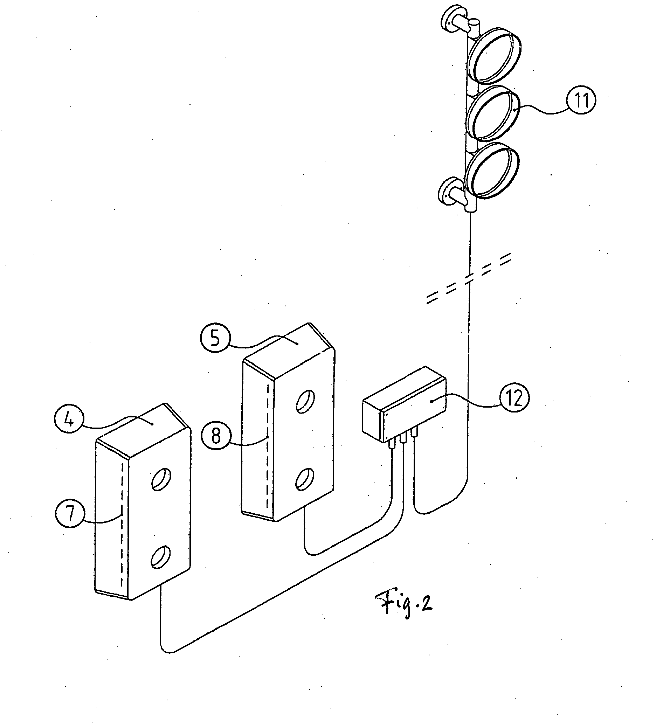

Figure 2 shows a perspective view of two buffers with a traffic light.

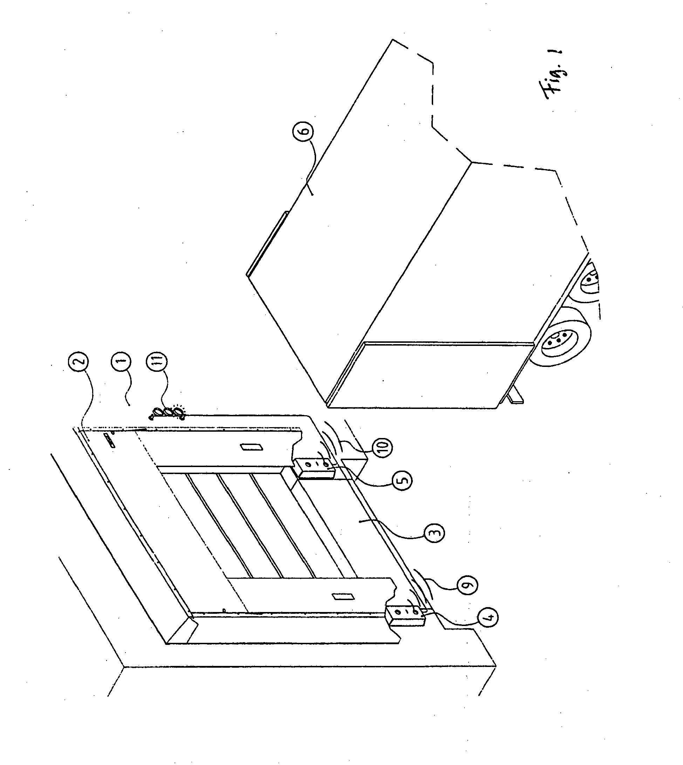

As can be seen in the figures against a wall 1 at a dock shelter 2 at the level of the loading platform 3 two buffers 4, 5 are provided. In figure 1 further is shown a truck 6 engaged in docking at the loading platform 3. The buffers 4, 5 are intended to absorb impacts when the truck 6 is docking wrongly. In the example of the embodiment shown the buffers 4, 5 are formed by polyurethane, and are each provided with a capacitive sensor (indicated schematically by the dotted line with 7 and 8) which, according to the invention the sensors, are embedded in the material of the buffer, for example a polyurethane, these sensors are cast there within. The sensors are positioned approximately 10 mm beneath the surface of the material of the buffer and are not visible from outside. The sensors 7, 8 are provided all round beneath the entire surface of the material of the buffer.
By means of the capacitive sensors a movement of the truck 6 in an area 9, 10 in front of the buffers 4, 5 can be detected. Further the traffic light 11 is provided which can be controlled by the control unit 12 under the effect of the signals coming from the capacitive sensors 7, 8.

The distance is measured variable, while at predetermined fixed distances the control directs the signaller to give a different signal (traffic light from green to orange to red). The distance is adjustable.

With the buffer according to the invention it is possible to have trucks dock in a more controlled manner, because the driver automatically receives information by means of the several light signals of the traffic light with respect to the remaining space between the back side of the truck and the buffer. With the buffer according to the invention it is further possible to immediately detect a possible rolling away of the truck during loading and to give a warning signal, such as a sound signal or a light signal. Further it is possible to provide in a system in which the vehicle presents itself automatically and the loading and unloading opening is released automatically.

Because the sensor is situated beneath the surface of the buffer it is possible to drive against the buffer, without the sensor thereby being damaged immediately.

## Claims

1. Buffer (4, 5) intended to be mounted to a wall (1) at a parking place or car parking station and such like, more in particular intended to be mounted to a wall at a loading platform (3), wherein means are provided by which a signal can be given in reaction to a movement of a vehicle (6) in an area in the surroundings of the buffer, wherein the means comprise a sensor (7, 8) for detecting of the movement of the vehicle and a signaller the control of which takes place under the effect of a signal from the sensor (7, 8), **characterized in that** the sensor (7, 8) is cast within and embedded in the material of the buffer (4, 5).

2. Buffer (4, 5) according to claim 1, **characterized in that** the sensor (7, 8) is formed by a capacitive sensor.

3. Buffer according to claim 1 or 2, **characterized in that** the buffer (4, 5) is formed of a polyurethane or a rubber.

4. Buffer according to claim 1, 2 or 3, **characterized in that** the sensor (7, 8) is positioned approximately 10 mm beneath the surface of the material of the buffer (4, 5).

5. Buffer according to one of the preceding claims, **characterized in that** the sensor (7, 8) is provided all round beneath the entire surface of the material of the buffer (4, 5).

## Patentansprüche

1. Puffer (4, 5), der dafür vorgesehen ist, an einer Wand (1) auf einem Parkplatz oder einer Fahrzeugparkstation und dergleichen angebracht zu werden, insbesondere dafür vorgesehen, an einer Wand an einer Ladeplattform (3) angebracht zu werden, wobei Mittel vorgesehen sind, durch welche ein Signal in Reaktion auf die Bewegung eines Fahrzeugs (6) in einem Bereich in der Umgebung des Puffers abgegeben werden kann, wobei die Mittel einen Sensor (7, 8) zum Ermitteln der Bewegung des Fahrzeugs und einen Signalgeber aufweisen, dessen Steuerung durch ein Signal von dem Sensor (7, 8) bewirkt wird, **dadurch gekennzeichnet, dass** der Sensor (7, 8) in das Material des Puffers (4, 5) eingegossen und eingebettet ist.

2. Puffer (4, 5) nach Anspruch 1, **dadurch gekennzeichnet, dass** der Sensor (7, 8) durch einen kapazitiven Sensor gebildet ist.

3. Puffer nach Anspruch 1 oder 2, **dadurch gekennzeichnet, dass** der Puffer (4, 5) aus einem Polyurethan oder einem Gummi gebildet ist.

4. Puffer nach Anspruch 1, 2 oder 3, **dadurch gekennzeichnet, dass** der Sensor (7, 8) ungefähr 10 mm unterhalb der Oberfläche des Materials des Puffers (4, 5) angeordnet ist.

5. Puffer nach einem der vorhergehenden Ansprüche, **dadurch gekennzeichnet, dass** der Sensor (7, 8) umlaufend unterhalb der gesamten Oberfläche des Materials des Puffers (4, 5) vorgesehen ist.

## Revendications

1. Butoir (4, 5) prévu pour être monté sur un mur (1) au niveau d'une place de parking ou d'un parking couvert pour voitures et analogues, prévu plus particulièrement pour être monté sur un mur au niveau d'une plate-forme de chargement (3), des moyens étant fournis par lesquels un signal peut être émis en réaction à un mouvement d'un véhicule (6) dans la zone voisine du butoir, les moyens comprenant un capteur (7, 8) pour détecter le mouvement du véhicule et un dispositif de signalisation dont la commande se déclanche sous l'effet d'un signal provenant du capteur (7, 8), **caractérisé en ce que** le capteur (7, 8) est moulé et intégré dans le matériau du butoir (4, 5).

2. Butoir (4, 5) selon la revendication 1, **caractérisé en ce que** le capteur (7, 8) est formé par un capteur capacitif.

3. Butoir selon la revendication 1 ou 2, **caractérisé en ce que** le butoir (4, 5) est formé à partir de polyuréthane ou de caoutchouc.

4. Butoir selon la revendication 1, 2 ou 3, **caractérisé en ce que** le capteur (7, 8) est positionné approximativement 10 mm sous la surface du matériau du butoir (4, 5).

5. Butoir selon l'une quelconque des revendications précédentes, **caractérisé en ce que** le capteur (7, 8) est prévu tout autour sous la surface totale du matériau du butoir (4, 5).
